# EUROPÄISCHE PATENTANMELDUNG

(11) **EP 2 196 375 A2**
(43) Veröffentlichungstag der Anmeldung: **16.06.2010**
(21) Anmeldenummer: 09176294.8
(22) Anmeldetag: 18.11.2009
(51) Int. Cl.: B61D 17/08, B61D 17/18

(54) **Innenverkleidung eines Fahrzeuges**

(30) Priorität: 10.12.2008 DE 102008061381
(71) Anmelder: SIEMENS AKTIENGESELLSCHAFT, 80333 München (DE)
(72) Erfinder: Ackermann, Jürgen, 42553, Velbert (DE); Lohmann, Thomas, 46485, Wesel (DE); Schade, Burkhard, 44879, Bochum (DE); Wehling, Ludwig, 46325, Borken (DE)

(57) **Zusammenfassung**

Die Erfindung betrifft die Innenverkleidung eines Fahrzeuges, insbesondere Wandverkleidung eines Schienenfahrzeuges im Personentransportverkehr, mit Befestigungen und Einbauöffnungen für mechanische, akustische und/oder elektrische Funktions- oder Anzeigenelemente (5a bis 5d). Um die Innenverkleidung kostengünstig herzustellen und die Anbringung der erforderlichen Funktions- oder Anzeigeelemente montage- und wartungsfreundlich zu gestalten, wird vorgeschlagen, dass an gleichen Einbauorten gleichartiger Fahrzeuge jeweils gleiche Wandverkleidungen (1) verbaut sind und zur Aufnahme der mechanischen, akustischen und/oder elektrischen Funktions- oder Anzeigeelemente (5a bis 5d) ein auswechselbar auf die Wandverkleidung (1) aufsetzbares oder in diese einsetzbares, entsprechend gestaltes standardisiertes Montageelement (2) vorgesehen ist.

## Beschreibung

Die Erfindung betrifft die Innenverkleidung eines Fahrzeuges, insbesondere Wandverkleidung eines Schienenfahrzeuges im Personentransportverkehr, mit Befestigungen und Einbauöffnungen für mechanische, akustische und/oder elektrische Funktions- oder Anzeigenelemente.

Die Innenverkleidung von Fahrzeugen, insbesondere die Wandverkleidung von Schienenfahrzeugen zum Transport von Fahrgästen,deckt zum Erhalt eines ästhetischen Gesamteindrucks die Innenseite des Wagenkastens ab und schafft ein für die Fahrgäste angenehmes Ambiente. Gleichzeitig wird die Wandverkleidung dazu genutzt, die Funktions- oder Anzeigeelemente aufzunehmen, die zur Ausführung unterschiedlicher Anforderungen erforderlich sind. So werden z.B. Türöffner, Anzeigedisplays oder akustische Einrichtungen in die Wandverkleidung eingebaut, in die zu diesem Zweck Öffnungen oder Durchbrüche eingebracht werden, in denen diese Elemente aufgenommen werden. Die Öffnungen wurden individuell den Funktions- und Anzeigeelementen angepasst und entsprechend gestaltet. Im Störungs- und/oder Wartungsfall müssen gewöhnlich diejenigen Wandteile, in denen sich die Funktions- und Anzeigeelemente befinden, demontiert werden; es ist auch schon vorgeschlagen worden, große Wandteile wegschwenkbar zu gestalten.

Sowohl das individuelle Anbringen von Durchbrüchen und Öffnungen für die Funktions- und Anzeigenelemente und deren Verdrahtungen, wie auch die Montage der Bauteile an den oder in den Wandteilen gestaltet sich schwierig und kostenaufwändig.

Der vorliegenden Erfindung liegt deshalb die Aufgabe zugrunde, die Innenverkleidung, insbesondere die Wandverkleidung, eines Fahrzeuges der eingangs beschriebenen Art so zu gestaltet, dass die Anbringung der erforderlichen Funktions- oder Anzeigeelemente vereinfacht ist, dass die Wartung oder Instandsetzung defekter Elemente schnell und einfach durchgeführt werden kann und dass die für die Montage und Demontage sowie die Herrichtung der Wandverkleidung erforderlichen Kosten möglichst niedrig sind.

Zur Lösung der Aufgabe wird erfindungsgemäß vorgeschlagen, dass an gleichen Einbauorten gleichartiger Fahrzeuge jeweils gleiche Wandverkleidungen verbaut sind und zur Aufnahme der mechanischen, akustischen und/oder elektrischen Funktions- oder Anzeigeelemente ein auswechselbar auf die Wandverkleidung aufsetzbares oder in diese einsetzbares, entsprechend gestaltes standardisiertes Montageelement vorgesehen ist.

Die vorliegende Erfindung erreicht damit zweierlei Vorteile, nämlich einerseits, das vorgefertigte gleiche Wandverkleidungen verwendet werden können, die bereits herstellerseitig zur Aufnahme verschiedener standardisierter Montageelemente vorbereitet sind und andererseits standardisierte Montageelemente vorbereitet sind, die die mechanischen, akustischen und/oder elektrischen Funktions- oder Anzeigeelemente aufnehmen und die vorgefertigt auf die Wandverkleidungen aufgesetzt oder in diese eingesetzt und mit diesen verbunden werden. Unabhängig von der Art, der Größe und der Funktion der mechanischen, akustischen und/oder elektrischen Funktions- oder Anzeigeelemente wird die Wandverkleidung universell vorbereitet, so dass auf gleichartigen Wandverkleidungen für gleichartige Einbauort, z.B. neben den Türen des Fahrzeuges, unterschiedliche Funktions- oder Anzeigeelemente mit den entsprechenden vorgefertigten Montageelementen aufgesetzt oder eingesetzt werden können. Dadurch brauchen die Wandverkleidungselemente selbst nicht mehr individuell gestaltet und vorbereitet zu werden sondern lediglich die erfindungsgemäßen Montageelemente, so dass allein darin sowohl eine Ersparnis bei den Herstellkosten, wie auch der Herstell- und Montagezeiten zu verzeichnen sind.

In einer Ausgestaltung der Erfindung ist vorgesehen, dass das Montageelement eine in jeder der Wandverkleidungen an gleicher Stelle vorgesehene universelle Öffnung abdeckt. Durch diesen Vorschlag der Erfindung wird ermöglicht, alle Wandverkleidungen für gleichartige Einbauorte bereits in der Fertigung mit universell nutzbaren Öffnungen an gleicher Stelle versehen zu können, die im Einbauzustand von den auf dem Montageelement montierten Funktions- oder Anzeigeelementen oder deren Verdrahtungen durchdrungen werden. Wird die Öffnung nicht zum Einbau von Funktions- oder Anzeigeelementen genutzt, kann diese einfach durch ein die Öffnung abdeckendes deckelartiges Montageelement verschlossen werden.

Ist das Montageelement mit den Funktions- und/oder Anzeigeelementen bestückt, können Funktionsteile der Elemente die Öffnung in der Wandverkleidung nach Innen durchdringen, so dass von außen nur die für die Bedienung notwendigen Teilen der Funktions- und Anzeigeelemente zu sehen ist.

In einer weiteren Ausgestaltung der Erfindung ist vorgesehen, dass das Montageelement zur leichten Zugänglichkeit zu den mechanischen, akustischen und/oder elektrischen Funktions- oder Anzeigeelementen einfach entfernbar bzw. in eine Stellung verschwenkbar ist, die eine gute Zugänglichkeit zu den mechanischen, akustischen und/oder elektrischen Funktions- oder Anzeigeelementen ermöglicht. Dies geschieht erfindungsgemäß am einfachsten dadurch, dass das Montageelement als Tür oder Klappe ausgebildet ist, die die mechanischen, akustischen und/oder elektrischen Funktions- oder Anzeigenelemente aufnimmt.

Erfindungsgemäß kann bei einer Störung oder Überprüfung der Funktionselemente die Klappe bzw. die Tür weggeschwenkt werden, so dass die Rückseite der Funktions- oder Anzeigenelemente freigelegt wird. Die Behebung von Störungen oder Messungen können auf diese Weis sehr leicht und einfach durchgeführt werden, darüber hinaus ergibt sich der weitere Vorteil, dass die Montageelemente bei der Fertigung komplett vorbereitet werden können, um sie später mit der Wandverkleidung wegschwenkbar oder lösbar zu verbinden. Dabei können z.B. elektrische Verbindungen als Steckverbindungen vorgesehen werden, die zum Austausch und bei der Montage der Montageelemente leicht lösbar bzw. wieder verbindbar sind.

Die Erfindung schafft eine günstige Lösung zum Einbau mechanische akustischer und/oder elektrischer Funktions- oder Anzeigeelemente in die Innenverkleidung eines gattungsgemäßen Fahrzeuges. Durch die Vereinfachung der Montage, durch Vorfertigung von Bauelementen und durch standardisierte Vorbereitung sowohl der Wandverkleidungsteile wie auch der Montageelemente lassen sich Zeit und Kosten sparen. Im Störungsfall ist die Reparatur deutlich vereinfacht, weil die Elemente leicht und schnell zugänglich sind.

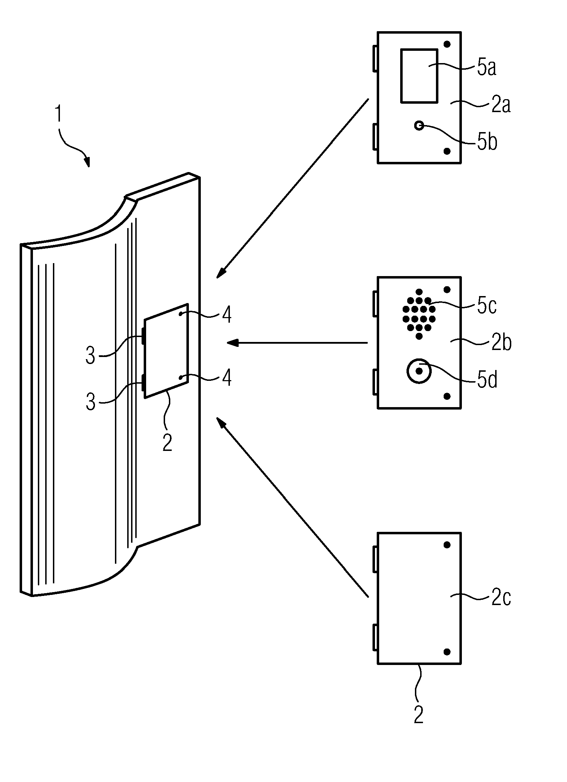

Ein Ausführungsbeispiel der Erfindung wird in der Zeichnung dargestellt und nachfolgend beschrieben.

Die einzige Zeichnungsfigur zeigt ein Element einer Wandverkleidung 1 eines Fahrzeuges, das angepasst an den vorgesehenen Einbauort im Wagenkasten gestaltet ist. Die Wandverkleidung 1 wird in herkömmlicher Weise am Wagenkasten befestigt und ist nur ein Teil der kompletten Innenverkleidung des Fahrzeuges. In die Wandverkleidung 1 ist ein türartig gestaltetes Montageelement 2 eingesetzt, das eine in der Wandverkleidung 1 (in der Zeichnung nicht sichtbar) Öffnung abdeckt. Das Montageelement 2 ist über Scharniere 3 mit der Wandverkleidung 1 verbunden und gegen unbefugtes Öffnen durch Schrauben 4 gesichert.

Wie in der rechten Hälfte der Zeichnung erkennbar, kann das Montageelement 2 gegen unterschiedlich gestaltete andere Montageelemente 2a, 2b und 2c ausgetauscht werden, in die unterschiedliche mechanische akustische und/oder elektrische Funktions- oder Anzeigeelemente 5a bis d eingesetzt sind. So kann beispielsweise wie in der oberen Darstellung gezeigt, eine Anzeige 5a mit einem Türöffnungsknopf 5b vorgesehen sein; wie in der mittleren Anzeige dargestellt, eine Gegensprechanlage 5c mit Rufknopf 5d oder aber nur ein einfacher Deckel 2c zum Verschließen der Öffnung.

Alle in einem Fahrzeug am gleichen Einbauort vorgesehenen Wandverkleidungen 1 sind identisch gefertigt mit einer vorbereiteten Öffnung versehen, die durch eines der hier beispielhaft angegebenen Montageelemente 2 abdeckbar ist. Das erleichtert die Herstellung der Wandverkleidung 1 selbst sowie der entsprechenden Montageelemente 2 für die Funktions- oder Anzeigenelemente 5a bis d. Die Montageelemente 2 können, nachdem die Schrauben 4 gelöst wurden, durch Verschwenken um die Scharniere 3, ähnlich einer Tür, geöffnet werden, wobei die in die Montageelemente 2 eingebauten Funktions- und Anzeigenelemente 5a bis d mit den Montageelementen 2 nach außen geschwenkt werden, so dass Wartungs- oder Montagearbeiten leicht durchgeführt werden können.

## Patentansprüche

1. Innenverkleidung eines Fahrzeuges, insbesondere Wandverkleidung eines Schienenfahrzeuges im Personentransportverkehr, mit Befestigungen und Einbauöffnungen für mechanische, akustische und/oder elektrische Funktions- oder Anzeigeelemente,
**dadurch gekennzeichnet, dass**
an gleichen Einbauorten gleichartiger Fahrzeuge jeweils gleiche Wandverkleidungen (1) verbaut sind und zur Aufnahme der mechanischen, akustischen und/oder elektrischen Funktions- oder Anzeigeelemente (5a bis 5d) ein auswechselbar auf die Wandverkleidung (1) aufsetzbares oder in diese einsetzbares, entsprechend gestaltes standardisiertes Montageelement (2) vorgesehen ist.

2. Innenverkleidung eines Fahrzeuges nach Anspruch 1, **dadurch gekennzeichnet, dass** das Montageelement (2) eine in jeder der Wandverkleidungen (1) an gleicher Stelle vorgesehene universelle Öffnung abdeckt.

3. Innenverkleidung eines Fahrzeuges nach Anspruch 1 und 2, **dadurch gekennzeichnet, dass** mindestens Teile der mechanischen, akustischen und/oder elektrischen Funktions- oder Anzeigeelemente (5a bis 5d) die universelle Öffnung in der Wandverkleidung (1) durchdringen.

4. Innenverkleidung eines Fahrzeuges nach einem der Ansprüche 1 bis 3, **dadurch gekennzeichnet, dass** das Montageelement (2) zur leichten Zugängigkeit zu den mechanischen, akustischen und/oder elektrischen Funktions- oder Anzeigeelementen (5a bis 5d) leicht entfernbar bzw. in eine Stellung verschwenkbar ist, die eine gute Zugängigkeit zu den mechanischen, akustischen und/oder elektrischen Funktions- oder Anzeigeelementen (5a bis 5d) ermöglicht.

5. Innenverkleidung eines Fahrzeuges nach einem der Ansprüche 1 bis 4, **dadurch gekennzeichnet, dass** das Montageelement (2) als Tür oder Klappe ausgebildet ist, die die mechanischen, akustischen und/oder elektrischen Funktions- oder Anzeigeelemente (5a bis 5d) aufnimmt.

6. Innenverkleidung eines Fahrzeuges nach einem der Ansprüche 1 bis 4, **dadurch gekennzeichnet, dass** das Montageelement (2) aus dem Werkstoff der Wandverkleidung (1) gefertigt ist.
